(19) Europäisches Patentamt European Patent Office Office européen des brevets

(11) **EP 3 297 816 B1**

(12) **EUROPEAN PATENT SPECIFICATION**

(45) Date of publication and mention
of the grant of the patent:
**14.10.2020 Bulletin 2020/42**

(51) Int Cl.:
*B29D 30/72* (2006.01)    *B60C 13/00* (2006.01)
*B29C 59/16* (2006.01)    *B23K 26/364* (2014.01)
*B23K 103/00* (2006.01)    *B23K 26/00* (2014.01)
*B23K 26/36* (2014.01)

(21) Application number: **16724410.2**

(22) Date of filing: **20.05.2016**

(86) International application number:
**PCT/EP2016/061499**

(87) International publication number:
**WO 2016/185043 (24.11.2016 Gazette 2016/47)**

(54) **RECESS PATTERN IN A RUBBER ARTICLE**

VERTIEFUNGSMUSTER IN EINEM GUMMIGEGENSTAND

MOTIF D'ÉVIDEMENTS DANS UN ARTICLE EN CAOUTCHOUC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2015 EP 15168748**

(43) Date of publication of application:
**28.03.2018 Bulletin 2018/13**

(73) Proprietor: **4JET Technologies GmbH
52477 Alsdorf (DE)**

(72) Inventors:
 • **KRAUS, Armin
   52457 Aldenhoven (DE)**
 • **REISS, Armin
   52072 Aachen (DE)**
 • **KEULERS, Patrick
   52066 Aachen (DE)**

(74) Representative: **Dilg, Haeusler, Schindelmann
Patentanwaltsgesellschaft mbH
Leonrodstraße 58
80636 München (DE)**

(56) References cited:
**EP-A1- 0 669 203        EP-A1- 0 958 881
EP-A2- 1 437 672        WO-A1-2005/000714
WO-A1-2014/063836        WO-A2-2011/107602
US-A- 4 564 737        US-A1- 2003 201 202
US-A1- 2013 082 037        US-B1- 6 252 196**

**Description**

FIELD OF INVENTION

The present invention relates to the field of providing rubber articles with a digital code pattern.

BACKGROUND

EP 1 063 071 A2 discloses a polymer article in particular a tire with a visible surface wherein either a part of the surface is corrugated in such a way that the distance from corrugation ridge to corrugation ridge is between 4 $\mu$m and 40 $\mu$m or at least a part of the surface is nubbed in such a way that the distance from nub tip to nub tip is between 5 $\mu$m and 60 $\mu$m.

US 2009/0218019 A1 discloses an article having at least one visible surface, this surface comprising on at least part of it a pattern contrasting with the surface of the article, this pattern comprising a plurality of tuft distributed over the entire said pattern, each tuft having an average cross section between 0.003 and 0.06 mm$^2$. Also disclosed is a moulding process for forming a high-contrast pattern on a surface of an article that can be moulded in a mould, this process consisting in producing, at the position of the pattern on the surface of the mould, a plurality of cavities of average cross section between 0.003 and 0.06 mm$^2$. The pattern gives the article on which it is produced a velvet feel.

From the web site "http://qr.biz/articles/the michelin concept qr code tire meets the interest s of farmers/" it is known to provide a tire with a QR code by means of velvet technology.

US 2012/0227879 A1 discloses a tire having a visible surface comprising patterns contrasting with said surface, said pattern comprising, over the entire surface thereof, a plurality of tufts distributed with a density of at least five tufts per mm$^2$ or a plurality of blades which are substantially parallel to one another and arranged with a pitch of less than 0.5 mm, each tuft having a mean cross section having a diameter of between 0.03 mm and 0.5 mm or each blade having a mean width of between 0.03 mm and 0.5 mm, characterized in that the walls of the tufts or of the blades have, over at least one quarter of the area thereof, a mean roughness Rz of between 5 $\mu$m and 30 $\mu$m. The effect of these tufts or blades is to trap the incident light on the surface of the pattern and, by light absorption, to give a black matt appearance to the pattern intended to be produced. Further disclosed is a method of producing molds intended to form the visible imprint of the tires comprising such patterns during vulcanisation.

WO 2005/000714 A1 discloses a tire with a barcode strip which has been attached to the tire. An encoded symbol such as a self-clocking glyph code, data matrix, or other types of encoded symbology, also referred to as a 2D symbol, can be used for subsequent engraving on sidewall of the tire.

US 2003/0201202 A1 discloses a multi-layered rubber identification or ID unit of a contrasting color for a tire. Drying is carried out without fully curing the semicured ID unit layers that are needed to attach the ID units to a tire.

US 4,564,737 discloses writing with a pulsed laser beam a tire tread pattern on a large curved cylindrical surface of decreasing radius such as a complete set of plaster model blocks or a prototype tire.

SUMMARY

Conventional techniques for surface manipulation of a rubber article (e.g. a tire) are suitable for generating large surface areas of manipulated surface but are not specifically adapted and optimized for providing the rubber article with a digital code pattern.

In view of the above-described situation, there exists a need for an improved technique that enables to provide a digital code pattern to a rubber article, while substantially avoiding or at least reducing one or more of the above-identified problems.

This need may be met by the subject matter according to the independent claims. Advantageous embodiments of the herein disclosed subject matter are described by the dependent claims.

According to an embodiment of a first aspect of the herein disclosed subject matter there is provided a method of marking a rubber article according to claim 1.

According to embodiments of the first aspect, the method is adapted for providing the functionality of one or more of the herein disclosed embodiments and/or for providing the functionality as required by one or more of the herein disclosed embodiments, in particular of the embodiments of the second, third and fourth aspect disclosed herein.

According to an embodiment of a second aspect of the herein disclosed subject matter there is provided a marking device for marking a rubber article, in particular a tire, according to claim 7. Tools other than a laser (e.g. mechanical tools) are also contemplated.

According to embodiments of the second aspect, the marking device is adapted for providing the functionality of one or more of the herein disclosed embodiments and/or for providing the functionality as required by one or more of the herein disclosed embodiments, in particular of the embodiments of the first, third and fourth aspect disclosed herein.

According to an embodiment of a third aspect of the herein disclosed subject matter there is provided a rubber article according to claim 8.

According to embodiments of the third aspect, the rubber article is adapted for providing the features resulting from by one or more of the herein disclosed embodiments, in particular of the embodiments of the first, second and fourth aspect.

According to an embodiment of a fourth aspect of the herein disclosed subject matter there is provided a computer program product according to claim 15.

According to embodiments of the fourth aspect, the computer program product is adapted for providing the functionality of one or more of the herein disclosed embodiments and/or for providing the functionality as required by one or more of the herein disclosed embodiments, in particular of the embodiments of the first, second and third aspect.

These aspects of the herein disclosed subject matter are based on the idea that the characteristics of a method or a marking device for providing a rubber article with a digital code pattern can be improved by a suitable dimensions of the involved structure elements, in particular the recess portions and protrusions defining the digital code pattern. It has been found that in accordance with embodiments of the herein disclosed subject matter even large structure elements are suitable for defining relatively small code modules of the digital code pattern.

It should be understood that, since aspects of the herein disclosed subject matter relate to a removal of rubber material in order to generate the recess pattern, the aspects and embodiments of the herein disclosed subject matter are well distinguished from methods which generate recesses or protrusions in the rubber article during molding of the rubber article. In contrast, aspects and embodiments of the herein disclosed subject matter allow the rubber article to be provided with a recess pattern (and hence with a digital code pattern) at any time after manufacture of the rubber article (in particular after molding and curing of the rubber article).

In the following, exemplary embodiments of the herein disclosed subject matter are described, any number and any combination of which may be realized in an implementation of aspects of the herein disclosed subject matter.

The digital code pattern comprises an array of code modules, e.g. a rectangular array of code modules. However, other array types are also contemplated. According to an embodiment, a code module is the lowest level information element of the digital code pattern. Further, the digital code pattern is a binary code pattern of which the code modules represent either a digital "0" or a digital "1". For example, according to an embodiment, the digital code pattern is a so-called QR code, in particular a version 3 QR code comprising 29 x 29 individual code modules. It is noted, that according to an embodiment in a binary digital code pattern a code module comprising a recess portion represents a "black" code module compared to a "white" code module having no recess portion.

It should be understood that within the scope of this application the term "black" represents a code module with a relatively low optical reflectivity and accordingly the term "white" represents a code module with a relatively high optical reflectivity which is higher than the optical reflectivity of the black module. In particular, embodiments of the herein disclosed subject matter are suitable for producing a digital code pattern on a black to black contrast, i.e. by reducing the optical reflectivity of the rubber article at a position corresponding to a black code module. According to an embodiment, a white code module is provided by the unaltered surface of the rubber article. However, a white code module can also be obtained by increasing the optical reflectivity of the surface of the rubber article, e.g. by polishing.

According to an embodiment, the removal of rubber material is performed with an electromagnetic radiation beam, in particular with a laser beam. Electromagnetic radiation provides an accurate and powerful means for manipulating the surface of a rubber article. In particular a laser beam can be provided with sufficient power to perform a method according to aspects and embodiments of the herein disclosed subject matter efficiently with low cost.

According to an embodiment, the Rayleigh length of the radiation beam is larger than 1.5 millimeters. Additionally and/or alternatively, according to an embodiment the method comprises adjusting the focus position of the radiation beam in the direction of the radiation beam during generating the digital code pattern. Both measures, providing a large Rayleigh length and adjusting the focus position of the radiation beam in the direction of the radiation beam allows for providing a curved surface with a digital code pattern of high quality. The same is true if the radiation forms an angle different from 90 degrees with the unaltered surface of the rubber article. It is noted that a curved surface can be approximately considered as an angled surface (forming an angle different from 90 degrees with the unaltered surface of the rubber article).

According to an embodiment first opposing wall portions of the first recess portion define a smallest width of an opening of the first recess portion. This smallest width of the opening of the first recess portion is also referred to as width of the first recess portion. In other words, according to an embodiment the (first) recess portion comprises an opening and two (first) opposing wall portions, wherein the (first) opposing wall portions define a smallest width of the opening of the (first) recess portion. According to a further embodiment, the first opposing wall portions define a first median plane therebetween.

Likewise, according to an embodiment second opposing wall portions of the second recess portion define a smallest width of an opening of the second recess portion. This smallest width of the opening of the second recess portion is also referred to as width of the second recess portion. According to a further embodiment, the second opposing wall portions define a second median plane therebetween.

According to an embodiment, the deviation of the width of the first recess portion compared to the width of the second recess portion arises (i) from a Rayleigh length of the radiation beam which is larger than 1.5 millimeters, and/or (ii) from an adjustment of the focus position of the radiation beam in a direction of the radiation beam during generating the digital code pattern. This allows for equal or approximately equal width of the first recess portion and width of the second recess portion. Equal or approximately equal widths of the recess portions of the recess pattern result in a high quality of the digital code pattern generated by the recess pattern. According to an embodiment, approximately equal means "the width of the second recess portion differing by less than ten percent from the width of the first recess portion" or, in another embodiment "the width of the second recess portion differing by less than five percent from the width of the first recess portion".

According to an embodiment, a direction of the radiation beam during generation of a recess portion defines the median plane of this recess portion. Hence, the center of the radiation beam lies in the first median plane and, by virtue of a movement of the radiation beam with respect to the rubber article (if any), which results in the respective recess portion, spans the median plane of this recess portion.

Hence, according to an embodiment a beam direction of the radiation beam during forming of the (first / second) recess portion was located in the median plane of the (first/ second) recess portion. According to an embodiment (e.g. in case of an elongated recess portions) a direction and/or a position of the radiation beam was changed during forming of the recess pattern. In turn, according to an embodiment, the average direction of the radiation beam can be (approximately) reconstructed from the cutting line between the first and the second median plane.

According to an embodiment, at least one of the first median plane and the second median plane forms an angle different from 90 degrees with the unaltered surface portion. In other words, the first recess portion and the second recess portion may be formed in a curved unaltered surface portion or in an unaltered surface portion which forms an angle different from 90 degrees with the radiation beam.

According to an embodiment, the following equation is fulfilled for the width of the recess portions formed in a curved or angled unaltered surface portion:

$$d(z)/d0 < SQRT (1 + (z / 1.5 \text{ millimeters})* (z / 1.5 \text{ millimeters}));$$

wherein

- d0 is the width of the first recess portion,
- the first recess portion is a recess portion having the smallest width among the recess portions of the recess pattern,
- d(z) is the width of the second recess portion,
- SQRT is the square root function,
- z is the distance of a plane through the opening of the second recess portion and perpendicular to the direction of the radiation beam from a plane through the opening of the first recess portion and perpendicular to the direction of the radiation beam.

According to an embodiment, the second recess portion is a recess portion having the largest width among the recess portions of the recess pattern.

The direction of the radiation beam can be determined (e.g. reconstructed) according to any embodiment described herein and may be e.g. an average direction of the radiation beam. Further, it should be understood that the distance z can be defined in other (exchangeable) ways. For example, according to an embodiment distance z is approximated (defined) as the distance between the opening of the second recess portion and the opening the first recess portion in a direction of a median line between opposing surface portions of the first or second recess portions.

According to an embodiment, the direction of the radiation beam is an average direction of the radiation beam which is given by the direction of a crossing line between the first median plane and the second median plane.

According to an embodiment, if the first and/or the second recess portion each is a circular recess (e.g. a hole) resulting e.g. from selective removal of material with a radiation beam without moving the beam direction and/or beam position, the walls of the circular recess portion together define a median line. It is noted that such a median line resulting from a circular recess portion defines a family of median planes of the circular recess, all of which have the median line in common. Any member of such a family may serve as the median plane of a circular recess portion.

According to an embodiment, the opening of the second recess portion is spaced from the opening the first recess portion in a direction of the first median line; the width of the second recess portion is differs from to the width of the first recess portion by less than ten percent (or five percent) of the width of the first recess portion.

According to a further embodiment, the width of the first recess portion and the width of the second recess portion is larger than 100 $\mu$m, in particular larger than 200 $\mu$m.

According to a further embodiment, the recess pattern comprising a plurality of recess portions which are part of a single recess forming a recess grid; the digital code pattern comprises an array of code modules; and the recess grid forms an angle to one of the edges of the modules, the angle being between 20 degrees and 70 degrees.

According to a further embodiment, the digital code pattern comprises a first code module and a second code module adjacent the first code module; and at the location of the first code module the recess pattern comprises a first type of recess portion and at the location of the second code module the recess pattern comprises a second type of recess portion which differs from the first type of recess portion in shape and/or orientation.

According to a further embodiment, the digital code pattern comprises three adjacent code modules in a line, a first code module, a third code module and a second code module between the first code module and the third code module; and at the position of the first code module and at the position of the third code module the recess pattern comprises a first type of recess portion and at the position of the second code module the recess pattern comprises a second type of recess portion which differs from the first type of recess portion in shape and/or orientation.

At least one of the first recess portion and the second recess portion have an aspect ratio between 0.2 and 2, wherein the aspect ratio is defined as the depth of the recess portion over the width of the recess portion.

According to a further embodiment, the unaltered surface portion is a curved surface portion.

According to a further embodiment, the recess pattern is a recess pattern that was generated by selective removal of rubber material with a radiation beam, in particular a laser beam.

According to an embodiment, the $1/e^2$ beam width of the radiation beam is larger than 100 $\mu$m, in particular larger than 200 $\mu$m, e.g. 500 $\mu$m. A larger beam width facilitates providing of a suitable laser beam for performing the method according to aspects and embodiments of the herein disclosed subject matter.

According to a further embodiment, the radiation beam is a laser beam of a carbon dioxide laser. A carbon dioxide laser has the advantage of providing a high a laser power which reduces the time necessary to generate the digital code pattern in the rubber article.

According to a further embodiment, the recess pattern comprises a plurality of recess portions (including the first recess portion and the second recess portion) which do not overlap each other wherein the plurality of recess portions together define an elevated grid, the elevated grid comprising the protrusion and a further protrusion crossing the protrusion. An elevated grid may provide for a digital code pattern that provides a relatively high wear resistance.

According to a further embodiment, the recess pattern comprises a plurality of recess portions which are part of a single recess forming a recess grid. A recess grid may provide an improved dirt accumulation behavior, in particular if the protrusions defined by the recess grid have a certain movability and therefore the ability to release dirt particles catch in a recess portion.

Hence, in more general terms, the recess pattern may provide a grid, and may in particular provide a recess grid and/or an elevated grid.

According to a further embodiment, the recess grid comprises two recess lines which cross each other at a crossing point of the recess grid; and the depth of the recess grid at the crossing point differs by less than 30% from the depth of the recess grid in an adjacent portion of one of the two crossing recess lines. This reduced recession at the crossing point of the recess lines can be obtained by reducing the removal of a rubber material at the crossing point during generating at least one of the recess lines. For example, if the two recess lines are generated with a laser beam, according to an embodiment a first recess line of the two recess lines may be generated with a constant laser power level over the crossing point and a second recess line of the two recess lines may be generated while reducing or shutting down the laser power level at the crossing point or shortly before the crossing point. The optimum distance ahead of the crossing point at which the laser power level should be reduced in order to obtain a shallow depth profile at the crossing point may depend on the beam profile and the actual laser power.

According to a further embodiment, the digital code pattern comprises an array (e.g. a rectangular array) of code modules; and the recess grid forms an angle to one of the edges of the modules, the angle being between 20 and 70 degrees.

According to an embodiment, the digital code pattern comprises three adjacent code modules in a line, a first code module, a third code module and a second code module between the first code module and the third code module, and the method further comprises generating at the location of the first code module a first type of recess portion and generating at the location of the second code module a second type of recess portion which differs from the first type of recess portion in shape and/or orientation. Such an embodiment may provide for an improved wear resistance of the digital code pattern.

According to a further embodiment, the digital code pattern comprises in a line a first code module, a second code module and a third code module adjacent the first code module, and the method further comprises generating at the position of the first code module and at the position of the third code module a first type of recess portion and generating at the position the second code module a second type of recess portion which differs from the first type of recess portion in shape and/or orientation. For example, in an embodiment, the second type of recess portion may have a larger recess area. In case of a binary digital code, the first code module, the second code module and the third code module are all black modules since they all include a recess portion. In such an embodiment, the larger recess area of the second type recess portion may improve the readability of adjacent black modules.

According to an embodiment, the method comprises: providing the rubber article, the rubber article comprising a thickened portion and an adjacent neighboring portion, the thickened portion having a thickness that is larger than the thickness of the neighboring portion; and generating the recess pattern only in the thickened portion. The thickened portion of the rubber article allows for deeper recesses and hence a higher aspect ratio of the recesses. Herein, the aspect ratio is defined as the ratio of the depth of the recess over the width of the recess. A higher aspect ratio may improve the readability of the digital code pattern. In this regard it is noted that readability of a digital code pattern refers to machine readability of the digital code pattern. According to an embodiment, the aspect ratio of the first recess portion and/or the second recess portion is between 0.2 and 2.

According to an embodiment, each of the first recess portion and the second recess portion define an opening in the unaltered surface surrounding the recess. The opening may have one of an U-shape, an O-shape or an L-shape. According to an embodiment, the first recess portion is part of a recess having a spiral shape.

According to an embodiment, wherein the first recess portion and the second recess portion are part of a same recess forming a baseline extending at least partly around the protrusion.

According to a further embodiment, the recess pattern defines a blade flanked by the first recess portion and the second recess portion. For example, the recess pattern may define at least two of said blades arranged parallel to each other.

According to an embodiment, the method further comprises reproducing the recess portions over the area of the recess pattern in an irregular density and/or in an irregular orientation.

According to an embodiment, the protrusion is a first protrusion; the recess pattern comprises a third recess portion; and the first recess portion and the third recess portion define a second protrusion therebetween, the second protrusion being recessed with regard to the unaltered surface of the rubber article. For example, according to an embodiment, the first recess portion and the third recess portion may overlap down to a certain depth level such that the second protrusion does not extend to the level of the unaltered surface of the rubber article but is itself recess with respect to the unaltered surface of the rubber article. Such partially overlapping recess portions (overlapping down to a certain depth level) may be generated with a laser having an Gaussian intensity profile, e.g. by generating the first the recess portion and generating, at a certain distance from the first recess portion the third recess portion wherein the certain distance is selected such that the second protrusion remains.

According to a further embodiment, the recess pattern defines a specific type of modules of the digital code pattern, e.g., for a binary code pattern the black (dark) modules of the digital code pattern.

According to an embodiment, at least one lateral dimension of the first recess portion is larger than the size of a single black module. It is noted that a lateral dimension is a dimension in a direction parallel to the surface of the rubber article. Further according to an embodiment, at least one lateral dimension of the protrusion is larger than the size of a single black module.

As used herein, reference to a computer program product is intended to be equivalent to a reference to a program element and/or a computer readable medium containing instructions for controlling a processor device to effect and/or coordinate the performance of the described method.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

Any suitable aspect or embodiment of the herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

The aspects and embodiments defined above and further aspects and embodiments of the herein disclosed subject matter are apparent from the examples to be described hereinafter and are explained with reference to the drawings, but to which the invention is not limited. The aforementioned definitions and comments are in particular also valid for the following detailed description and vice versa.

BRIEF DESCRIPTION OF THE DRAWINGS

Fig. 1 shows a marking device for marking a rubber article according to embodiments of the herein disclosed subject matter.

Fig. 2 shows the rubber article of Fig. 1 in greater detail and after performing a method according to embodiments of the herein disclosed subject matter.

Fig. 3 shows part of a rubber article comprising part of a recess pattern according to embodiments of the herein disclosed subject matter.

Fig. 4 shows part of a rubber article comprising part of a recess pattern according to embodiments of the herein disclosed subject matter.

Fig. 5 shows part of a rubber article comprising part of a recess pattern according to embodiments of the herein disclosed subject matter.

Fig. 6 shows part of a rubber article comprising part of a recess pattern according to embodiments of the herein disclosed subject matter.

Fig. 7 shows a cross-sectional view of a part of a rubber article according to embodiments of the herein disclosed subject matter.

DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of the similar or identical features is not repeated in the description of subsequent figures in order to avoid unnecessary repetitions. However, it should be understood that the description of these features in the preceding figures is also valid for the subsequent figures unless explicitly noted otherwise.

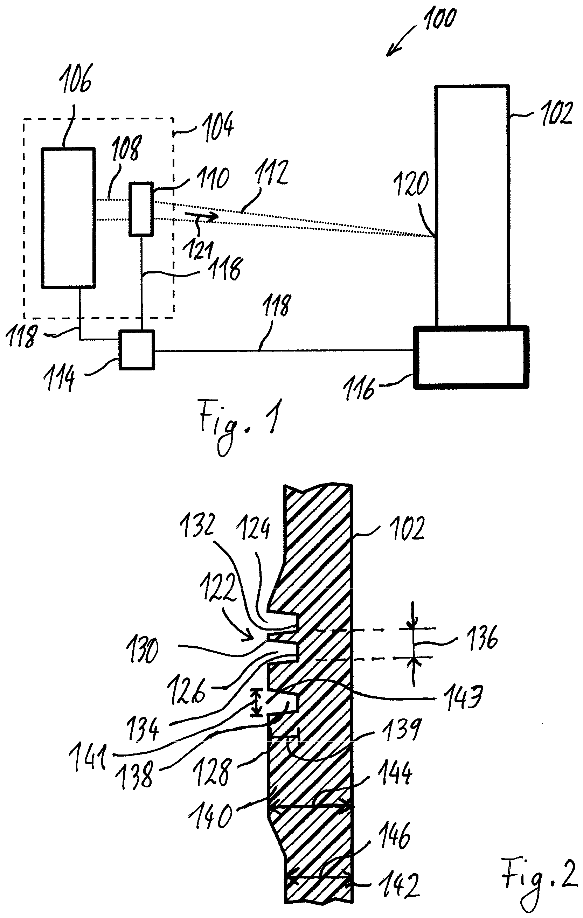

Fig. 1 shows a marking device 100 for marking a rubber article 102 according to embodiments of the herein disclosed subject matter.

The marking device 100 comprises a tool 104 in the form of a laser. The tool 104 is adapted (e.g. provides sufficient power) for removing rubber material of the rubber article 102. In accordance with an embodiment, the rubber article is vehicle tire. The tool 104 comprises a laser source 106 for generating a primary a laser beam 108 and an optical system 110 which receives the primary laser beam 108 and outputs in response hereto a secondary laser beam 112. Further, the marking device 100 comprises a control device 114 for controlling the tool 104 and in particular for controlling the laser source 106 and the optical system 110 to thereby perform a method according to aspects and embodiments of the herein disclosed subject matter. In accordance with an embodiment, the control device 114 is a processor device comprising one or more microprocessors for executing instructions of a computer program product according to embodiments of the herein disclosed subject matter.

In accordance with an embodiment, the marking device 100 further comprises a holder 116 for holding the rubber article 102 at a defined position with respect to the tool 104. According to an embodiment, the holder 116 is also controlled by the control device 104 and may comprise, according to an embodiment, a conveyor for moving the rubber article 102.

Control by the control device 104 is according to an embodiment performed via control signals indicated at 118 in Fig. 1. To this end, the control device 104 is according to an embodiment communicatively coupled to the respective device, i.e. to the laser source 106, the optical system 110 and the holder 116 in the described example.

According to an embodiment, the secondary laser beam 112 has a Rayleigh length which is larger than 1.5 millimeters (mm). According to an embodiment, the Rayleigh length is larger than 3 mm or even larger than 5 mm. According to an embodiment, the optical system 110 is adapted for adjusting the focus position 120 of the secondary laser beam 112 in the direction 121 of the (secondary) laser beam during generating the digital code pattern. In such a case, it is possible to implement embodiments of the herein disclosed subject matter with a small Rayleigh length on a curved rubber article 102.

According to an embodiment, the laser source 106 is a carbon dioxide laser which has a $1/e^2$ beam width larger than 200 micrometers ($\mu$m), e.g. a $1/e^2$ beam width of about 400 $\mu$m.

Fig. 2 shows the rubber article 102 of Fig. 1 in greater detail and after performing a method according to embodiments of the herein disclosed subject matter.

In accordance with an embodiment, the rubber article 102 comprises a recess pattern 122 in the rubber article. The recess pattern 122 defines a digital code pattern, e.g. a binary digital code pattern such as a QR code. In particular, according to embodiments of the herein disclosed subject matter, the digital code patter is a version 3 QR code.

According to an embodiment, the recess pattern 122 comprises a first recess portion 124 and the second recess portion 126 which are recessed with respect to an unaltered surface 128 of the rubber article 102. According to an embodiment, the unaltered surface 128 is an unaltered surface portion (and may interchangeably referred to as unaltered surface portion) proximate the recess pattern 122. The first recess portion 124 and the second recess portion 126 define therebetween a protrusion 113 which protrudes over a bottom 132 of the first recess portion and the bottom 134 of the second recess portion. In accordance with an embodiment, a pitch 136 between the first recess portion 124 and the second recess portion 126 is larger than 0.5 mm, e.g. larger than 0.6 or even larger than 0.7 mm.

It should be understood, that the recess pattern 122 comprises a plurality of recess portions a further one of which is shown in Fig. 2 at 138.

In accordance with an embodiment, the rubber article comprises a thickened portion 140 and an adjacent neighboring portion 142, wherein the thickened portion has a thickness 144 which is larger than a thickness 146 of the neighboring portion. The thicknesses 144, 146 are determined in a direction perpendicular to the unaltered surface 128 of the rubber article 102.

The thickened portion 140 allows for high aspect ratio of the recess portions, which is defined as the ratio of the depth of the recess over the width of the recess. In particular, according to an embodiment, the aspect ratio of a recess portion 138 is defined as the depth 139 of the recess portion to the smallest width 141 of the opening 143 of the recess portion 138. In this regard it is noted that the opening 143 of the recess 138 is defined by the edge the unaltered surface 128 forms with the recess 138.

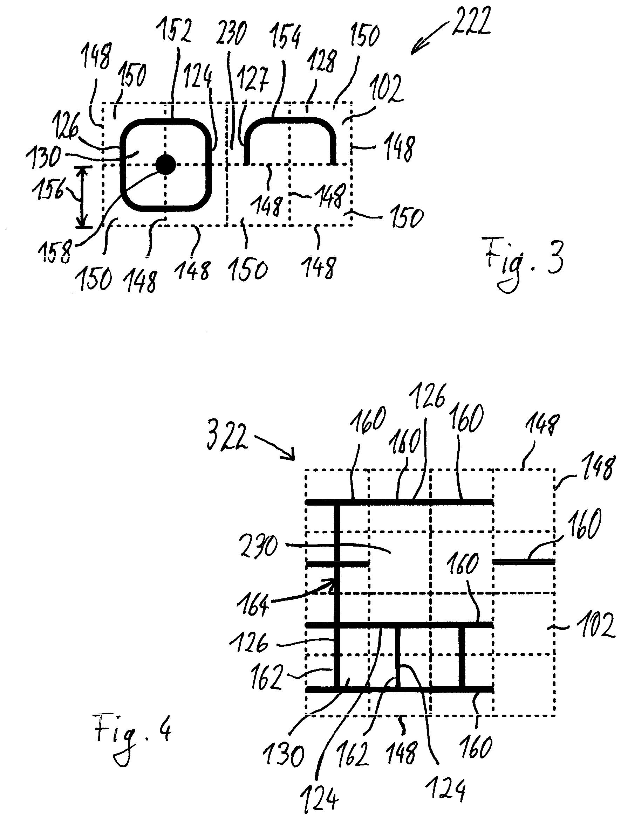

It is noted that Fig. 3 to Fig. 6 only illustrate principle features of the recess patterns shown. In particular, the dimensions of the recess portions compared to the dimensions of the code modules or other recess portions of the recess patterns may differ from the particular embodiment shown. It should be understood that the actual recess pattern, which defines a particular digital code pattern, depends on the content which is represented by the digital code pattern. However, a number of adjacent code modules which include a recess portion 124, 126 (such code modules are also referred to herein as black code modules) define a specific shape of the recess 152, 154 which is characteristic for respective embodiments.

With regard to Fig. 3 to Fig. 5 it is noted that the recesses and recess portions indicated by solid black lines are schematic and serve primarily the purpose of describing the shape of the recesses and recess portions. The width of the solid black lines does not necessarily correspond to the width of the respective recess portions. In particular, according to an embodiment the width of the recess portions is between 10% and 90% (or, in another embodiment, between 30% and 60%) of the lateral size 156 of a code module.

Fig. 3 shows part of a rubber article 102 comprising part of a recess pattern 222 according to embodiments of the herein disclosed subject matter.

A plurality of recess portions can be identified in the recess pattern 222 shown in Fig. 3. However, only exemplary recess portions are discussed in the following in order to illustrate embodiments of the herein disclosed subject matter. Further, there may be at least one set of interconnected recess portions, wherein each set of interconnected recess portions has a certain shape, such as an O-shape, as illustrated by a first recess 152 or an U-shape, as illustrated by a second recess 154 in Fig. 3. It is noted that the term "interconnected recess portions" refers to a single recess comprising the recess portions that are interconnected.

In accordance with an embodiment, the recess pattern 222 comprises a first recess portion 124 and a second recess portion 126 defining therebetween (i.e. between the first recess portion 124 and the second recess portion 126) a protrusion 130. Further, Fig. 3 shows edges of the code modules 150 of the digital code pattern. These edges are shown with dashed lines 148. It is noted, that the edges 148 are not physically transferred to the rubber article. Rather, the edges 148 are logical edges that are taken into account by a reader device (not shown in Fig. 3) based on the entire digital code pattern that is defined by the recess pattern. For example, in a QR code version 3 there are several features defined that allow the reader device to determine the version and the physical dimensions of the QR code, thereby defining the (logical) edges 148. In the context of this application the edges 148 are shown to facilitate understanding of the digital code pattern defined by the recess pattern 222. However, according to an embodiment only the recess portions 124, 126 (and the recesses 152, 154) are generated in the rubber article (and not the edges 148).

In accordance with an embodiment, the first recess portion 124 and the second recess portion 126 are part of a recess (the recess 152 in Fig. 3) surrounding a protrusion 130. The recess pattern 222 further comprises a third recess portion 127 which together with the first recess portion 124 defines a protrusion 230 therebetween. In accordance with an embodiment, the protrusion 230 has the form of a blade and may have its longest dimension in a direction parallel to at least one of the recess portions 124, 127 (depending on the digital code pattern that is to be implemented).

In accordance with an embodiment, the protrusion 130 has a base area of more than 0.2 mm$^2$. In this regard it is noted that the base area is defined in the typical way, namely the area defined by the recess 152 in the deepest plane spanned by the bottom of the recess 152. Further it is noted that the term "deep" refers to a direction perpendicular to the unaltered surface 128 of the rubber article and from the surface 128 into the rubber article.

In accordance with an embodiment, the digital code pattern, part of which is shown in Fig. 3, is a version 3 QR code comprising 29 x 29 code modules 150. Hence for a version 3 QR code of the size 15 x 15 square millimeters (mm$^2$)

a single module 150 has a lateral size 156 of 517 micrometers ($\mu$m) and hence an area of 517 x 517 $\mu$m$^2$. According to other embodiments the size of the QR code may be e.g. 16 x 16 mm$^2$ or 13 x 13 mm$^2$. Such sizes of QR codes are suitable for being provided on a rubber article in the form of a tire. Other sizes are possible depending on the size available on the rubber article.

In accordance with an embodiment, the protrusion 130 has a base area which is larger than the area of a single code module of the digital code pattern, as shown in Fig. 3. According to an embodiment, the protrusion 130 may comprise a further recess portion 158. The further recess portion 158 may be located in the center of the protrusion 130, as shown in Fig. 3. In this way, the readability of the digital code pattern may be improved.

The building instructions for generating a recess pattern according to an exemplary embodiment of the herein disclosed subject matter comprises generating a recess portion in the form of an arc for each black code module which preferably extends from one edge 148 of the code module 152 to an adjacent edge 148 of the same code module 150. Further, starting from one predefined starting code module 124 of the digital code pattern (e.g. the code module in the upper left corner of the digital code pattern) in the subsequent adjacent black code modules 126 the recess portions are oriented in a way that for up to four black neighboring code modules the recess portions as far as possible form a common recess 152, as shown in Fig. 3. According to another embodiment, the starting code module may be chosen such that it is part of a 2 x 2 group of adjacent black modules.

Fig. 4 shows part of a rubber article 102 comprising part of a recess pattern 322 according to embodiments of the herein disclosed subject matter.

In accordance with an embodiment, each black code module comprises a horizontal recess portion in the form of a horizontal line, e.g. as shown at 160 in Fig. 4. Between vertically adjacent black modules a connecting recess portion in the form of a vertical line is generated, e.g. as shown at 162 in Fig. 4. The connecting recess portions connect (i.e. form a common recess with) the horizontal recess portions of the vertically adjacent black modules, e.g. as shown in Fig. 4.

According to an embodiment, the horizontal recess portions 160 extend between the edges 148 of the code modules (i.e. they have a longitudinal size equal to the lateral size 156 of a code module 148) such that the horizontal recess portions 160 of adjacent black modules form a common recess. In accordance with an embodiment, four neighboring black modules (i.e. a 2 x 2 sub pattern of the digital code pattern) form a protrusion 130 between their horizontal recess portions 160 and the vertical recess portions 162, as shown in Fig. 4. Two black code modules separated by a white code module form a blade-like protrusion 230 between the two respective horizontal recess portions 160. It should be understood that opposing recess portions 160, 162 are first and second recess portions 124, 126 in the sense of the herein disclosed subject matter. In Fig. 4 some of the recess portions 160, 162 are exemplarily marked with a respective reference numbers 124, 126.

In accordance with an embodiment, at least some of the recess portions 160, 162 of the recess pattern 322 are part of a single (common) recess and form a recess grid 164.

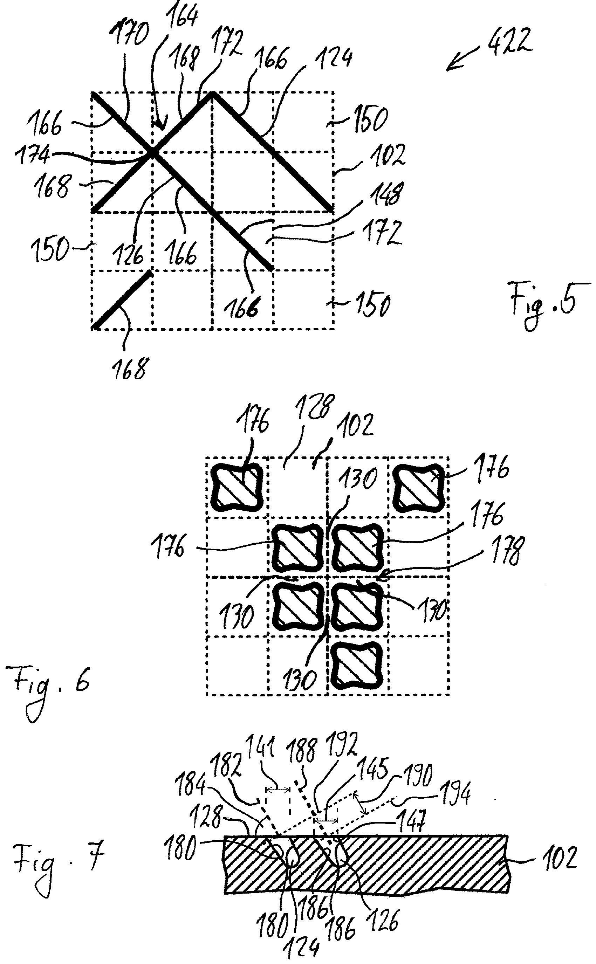

Fig. 5 shows part of a rubber article 102 comprising part of a recess pattern 422 according to embodiments of the herein disclosed subject matter.

According to an embodiment, the code modules 150 of the recess pattern 422 form an array, e.g. a rectangular array, as shown in Fig. 5. Further, in accordance with an embodiment, the recess pattern 422 comprises at least one recess portion 166 of a first type. According to an embodiment, the recess pattern 422 comprises at least one recess portion 168 of a second type, different from the first type recess portion 166. According to an embodiment, the first type recess portion 166 has the shape of a straight line, e.g. a diagonal line from the upper left corner to the lower right corner of the respective code module 150. According to a further embodiment, the second type recess portion 168 has the shape of a straight line, e.g. a diagonal line from the lower left corner to the upper right corner of the respective code module 150. Hence, the first type recess portion 166 and the second type recess portion 168 differ from each other in orientation of the recess portion.

In accordance with an embodiment, the first type recess portion 166 and the second type recess portion 168 are used in an alternating manner for adjacent to black modules. For example, if three black code modules are in a line, with a second code module arranged between a first code module and a third code module, the first type recess portion 166 is generated at the position of the first code module and of the third code module and the second type recess portion 168 is generated at the position of the second code module.

In accordance with an embodiment, the recess portion 166 in the form of a straight line forms an angle 172 to one of the edges 148 of its code module, wherein the angle is between 20 degrees and 70 degrees, e.g. between 40 degrees and 50 degrees, such as 45 degrees.

In accordance with an embodiment, adjacent recess portions form a single, common recess in the shape of a recess line 170, 172 (which may extend over two or more code modules). According to an embodiment, the recess pattern 422 comprises two recess lines 170, 172 which cross each other at a crossing point 174, thereby forming a recess grid 164. According to an embodiment, the recess grid 164 forms an angle (e.g. the angle 172, as shown in Fig. 5) to one of the edges 148 of the code modules 150. In accordance with an embodiment, the depth of the recess grid at the crossing point differs by less than 40% (or, according to other embodiments, less than 30 %, less than 20 % or even less than 10 %) from the depth of the recess grid besides the crossing point (e.g. between two crossing points).

As already mentioned with regard to Fig. 4, opposing recess portions 168, 170 are first and second recess portions 124, 126 in the sense of the herein disclosed subject matter.

Fig. 6 shows part of a rubber article 102 comprising part of a recess pattern 522 according to embodiments of the herein disclosed subject matter.

According to an embodiment, each black code module of the recess pattern 522 comprises a single recess portion 176 which may have the shape of a hole, e.g. an irregular hole, as shown in Fig. 6. The hachure within the black solid line in Fig. 6 indicates that the entire hachured area is recessed with respect to the unaltered surface 128 of the rubber article 102. The recess portions 176 do not overlap each other and together define an elevated grid 178 extending between the recesses (recess portions) 176. Opposing recesses 176 define a protrusion 130 therebetween. Hence, a 2 x 2 sub pattern of the digital code pattern defined by the recess pattern 522 define a first protrusion 130 and a further, second protrusion 130 crossing the first protrusion 130, as shown in Fig. 6.

Fig. 7 shows a cross-sectional view of a part of a rubber article according to embodiments of the herein disclosed subject matter.

According to an embodiment, first opposing wall portions 180 of the first recess portion 124 define a smallest width of an opening of the first recess portion 124 which is also referred to as width of the first recess portion. In accordance with an embodiment, the first recess portion 124 is a recess portion having the smallest width among the recess portions of the recess pattern. The first opposing wall portions 180 define a first median plane 182 therebetween.

According to a further embodiment, second opposing wall portions 186 of the second recess portion 126 define a smallest width 145 of an opening 147 of the second recess portion 126 which is also referred to as width of the second recess portion 126. In accordance with an embodiment, the second recess portion 126 is a recess portion having the largest width among the recess portions of the recess pattern. The second opposing wall portions 186 define a second median plane 188 therebetween. According to an embodiment, the (first or second) median plane defined by the respective (e.g. first or second) opposing wall portions is a plane that is equally spaced from the opposing wall portions.

According to an embodiment, at least one of the first median plane 182 and the second median plane 188 forms an angle 184 different from 90 degrees with the unaltered surface portion 128. According to an embodiment, the recess pattern and hence the first recess portion 124 and the second recess portion 126 were formed by selective removal of rubber material with a radiation beam, e.g. a laser beam. According to an embodiment, a beam direction of the radiation beam during forming of the second recess portion was located in the median plane and a direction and/or a position of the radiation beam were changed during forming of the recess pattern. In accordance with an embodiment the deviation of the width 141 of the first recess portion 124 compared to the width 145 of the second recess portion 126 arises from an adjustment of the focus position of the radiation beam in a direction of the radiation beam during generating the digital code pattern, as is shown in Fig. 7. Accordingly, the width 141 of the first recess portion 124 and the width 145 of the second recess portion 126 are approximately equal.

Without an adjustment of the focus position (not shown in Fig. 7), the deviation of the width 141 of the first recess portion 124 compared to the width 145 of the second recess portion 126 arises from (are determined by) a Rayleigh length of the radiation beam. According to an embodiment, at least in such a case the Rayleigh length is larger than 1.5 millimeters thus resulting only a moderate difference between the width 141 of the first recess portion 124 and the width 145 of the second recess portion 126.

According to an embodiment, the following formula (I) holds:

$$d(z)/d0 < SQRT (1 + (z / 1.5 \text{ millimeters})^* (z / 1.5 \text{ millimeters})) \qquad (I)$$

wherein

- d0 is the width 141 of the first recess portion 124,
- the first recess portion 124 is a recess portion having the smallest width among the recess portions of the recess pattern; e.g., according to an embodiment the first recess portion 124 a recess which has been generated with the radiation beam focused on the unaltered surface 128,
- d(z) is the width 145 of the second recess portion 126,
- SQRT is the square root function,
- z is the distance 190 of a plane 194 through the opening 147 of the second recess portion 126 and perpendicular to the direction of the radiation beam (e.g. perpendicular to the second median plane 188) from a plane 192 through the opening of the first recess portion 124 and perpendicular to the direction of the radiation beam (e.g. perpendicular to the first median plane 182).

According to an embodiment, the width of the opening is defined by the boundary of the opening, i.e. in a plane defined by the unaltered surface surrounding the opening, as shown in Fig. 7. According to another embodiment the width of the opening is defined along a direction perpendicular to the median plane of the opening (not shown in Fig. 7). The above mentioned formula (I) is strictly valid only for the latter definition of the width of the opening, which corresponds to the width of the opening in the beam direction of the radiation beam. However, for small deviations of the angles 184 of the first recess portion from the angle 184 of the second recess portion, the width size according to Fig. 7 of the first and the second recess portions increases nearly proportional and equation (I) can be considered valid also for angles 184 differing from 90 degrees.

Although some embodiments refer to a black or a white code module, etc., it should be understood that each of these references is considered to implicitly disclose a respective reference to only different types of modules. In particular in the sense of the herein disclosed subject matter a black code module is a code module which comprises part of the recess pattern (e.g. a recess portion). Also relative terms (vertical, horizontal, etc.) which relate to specific positions or orientations are considered to not limit the disclosed subject matter to the exemplary examples described and shown in the drawings but rather serve to facilitate understanding of some embodiments. Further, although some embodiments refer to a recess portion, it should be understood that according to an embodiment a recess portion may be part of a common recess which further comprises a second recess portion or even more recess portions. According to another embodiment, a recess portion may be a recess - in other words, according to an embodiment a recess may comprise only a single recess portion.

According to embodiments of the invention, any suitable entity (e.g. components, units and devices) disclosed herein are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices) are not limited to a dedicated entity as described in some embodiments. Rather, the herein disclosed subject matter may be implemented in various ways and with various granularity on device level or software module level while still providing the specified functionality. Further, it should be noted that according to embodiments a separate entity (e.g. a software module, a hardware module or a hybrid module (combined software/hardware module)) may be provided for each of the functions disclosed herein.

It should be noted that the term "comprising" does not exclude other elements or steps and the "a" or "an" does not exclude a plurality. Also elements described in association with different embodiments may be combined.

In order to recapitulate some of the above described embodiments of the present invention one can state:

Provided is a method of marking a rubber article, the method comprising:

generating a recess pattern in the rubber article by removal of rubber material, the recess pattern defining a digital code pattern comprising a plurality of code modules; the recess pattern comprising a first recess portion and a second recess portion, the first and second recess portions being recessed with respect to an unaltered surface of the rubber article; the first recess portion and the second recess portion defining therebetween a protrusion protruding over a bottom of each recess portion; wherein a pitch between the first recess portion and the second recess portion is larger than 0.5 mm or wherein the first recess portion and the second recess portion are part of a recess surrounding the protrusion and the protrusion has a base area of more than 0.2 square millimeters. According to an embodiment, two or more code modules share a common protrusion. In other words, these two or more code modules partially define a protrusion which extends over more than one code module.

**Claims**

1. Method of marking a rubber article (102), the method comprising:

generating a recess pattern (122, 222, 322, 422, 522) in the rubber article (102) by removal of rubber material, the recess pattern (122, 222, 322, 422, 522) defining a digital code pattern;
the digital code pattern comprising an array of code modules (150);
the digital code pattern being a binary code pattern of which the code modules (150) represent either a digital "0" or a digital "1";
the recess pattern (122, 222, 322, 422, 522) comprising a first recess portion (124) and a second recess portion (126), the first and second recess portions being recessed with respect to an unaltered surface of the rubber article;
the recess pattern (122, 222, 322, 422, 522) defining code modules with relatively low reflectivity, wherein a code module comprising a recess portion (122, 124) represents a code module with relatively low reflectivity compared to a code module with a relatively high reflectivity having no recess portion;

the first recess portion (124) and the second recess portion (126) defining therebetween a protrusion (130) protruding over a bottom (132, 134) of each recess portion;

wherein a pitch (136) between the first recess portion and the second recess portion is larger than 0.5 mm; or wherein the first recess portion (124) and the second recess portion (126) are part of a recess (152) surrounding the protrusion and the protrusion (130) has a base area of more than 0.2 square millimeters;

the method further comprising generating at least one of the first recess portion (124) and the second recess portion (126) with an aspect ratio between 0.2 and 2, wherein the aspect ratio is defined as the depth of the recess portion over the width of the recess portion.

2. Method according to claim 1, wherein said removal of rubber material is performed with an electromagnetic radiation beam, in particular with a laser beam (112);

in particular wherein
the Rayleigh length of the radiation beam is larger than 1.5 millimeters; and/or
the method comprising adjusting the focus position of the radiation beam in the direction of the radiation beam during generating the digital code pattern;
and/or
the $1/e^2$ beam width of the radiation beam is larger than 100 $\mu$m, in particular larger than 200 $\mu$m; and/or
the radiation beam is a laser beam of a carbon dioxide laser.

3. Method according to any of the preceding claims,

the recess pattern comprising a plurality of recess portions which do not overlap each other;
wherein the plurality of recess portions together define an elevated grid, the elevated grid comprising the protrusion and a further protrusion crossing the protrusion.

4. Method according to any of the claims 1 or 2,

the recess pattern comprising a plurality of recess portions which are part of a single recess forming a recess grid;
in particular wherein the recess grid comprises two recess lines which cross each other at a crossing point of the recess grid, and a depth of the recess grid at the crossing point differs by less than 30% from the depth of the recess grid in an adjacent portion of one of the two crossing recess lines;
and/or

wherein the digital code pattern comprises an array of code modules, and the recess grid forms an angle to one of the edges of the modules, the angle being between 20 and 70 degrees.

5. Method according to any one of the preceding claims, wherein the digital code pattern comprises a first code module and a second code module adjacent the first code module, the method further comprising
generating at the location of the first code module a first type of recess portion and generating at the location of the second code module a second type of recess portion which differs from the first type of recess portion in shape and/or orientation.

6. Method according to any one of claims 1 to 4, wherein the digital code pattern comprises three adjacent code modules in a line, a first code module, a third code module and a second code module between the first code module and the third code module, the method further comprising
generating at the position of the first code module and at the position of the third code module a first type of recess portion and generating at the position of the second code module a second type of recess portion which differs from the first type of recess portion in shape and/or orientation.

7. Marking device for marking a rubber article, in particular a tire, the marking device comprising:

a tool (104), in particular a laser, for removing rubber material of the rubber article;
a control device (114) for controlling the tool to thereby perform the method according to any one of the preceding claims.

8. Rubber article comprising:

a recess pattern (122, 222, 322, 422, 522) in the rubber article, the recess pattern defining a digital code pattern;
the digital code pattern comprising an array of code modules (150);
the digital code pattern being a binary code pattern of which the code modules (150) represent either a digital "0" or a digital "1";
the recess pattern comprising a first recess portion (124) and a second recess portion (126), the first and second recess portions being recessed with respect to an unaltered surface of the rubber article;
the recess pattern (122, 222, 322, 422, 522) defining code modules with relatively low reflectivity, wherein a code module comprising a recess portion (122, 124) represents a code module with relatively low reflectivity compared to a code module with a relatively high reflectivity having no recess portion;
the first recess portion (124) and the second recess portion (126) defining therebetween a protrusion (130, 230) protruding over a bottom of each recess portion;
wherein at least one of the first recess portion (124) and the second recess portion (126) has an aspect ratio between 0.2 and 2, wherein the aspect ratio is defined as a depth of the recess portion over the width of the recess portion;
wherein a pitch between the first recess portion (124) and the second recess portion (126) is larger than 0.5 mm or if the protrusion is surrounded by connected recess portions the protrusion (130, 230) has an base area of more than 0.2 square millimeters.

9. Rubber article according to claim 8, wherein

first opposing wall portions (180) of the first recess portion (124) define a smallest width of an opening of the first recess portion which smallest width is also referred to as width of the first recess portion;
the first opposing wall portions (180) define a first median plane (182) therebetween;
second opposing wall portions (186) of the second recess portion define a smallest width of an opening of the second recess portion which smallest width is also referred to as width of the second recess portion;
the second opposing wall portions (186) define a second median plane (188) therebetween;
at least one of the first median plane and the second median plane forms an angle different from 90 degrees with the unaltered surface portion;
wherein the recess pattern was formed by selective removal of rubber material with a radiation beam;
wherein the deviation of the width of the first recess portion compared to the width of the second recess portion arises

(i) from a Rayleigh length of the radiation beam which is larger than 1.5 millimeters, and/or
(ii) from an adjustment of the focus position of the radiation beam in a direction of the radiation beam during generating the digital code pattern.

10. Rubber article according to claim 8, wherein

first opposing wall portions (180) of the first recess portion define a smallest width of an opening of the first recess portion which smallest width is also referred to as width of the first recess portion;
the first opposing wall portions (180) define a first median plane (182) therebetween;
second opposing wall portions (186) of the second recess portion define a smallest width of an opening of the second recess portion which smallest width is also referred to as width of the second recess portion;
the second opposing wall portions (186) define a second median plane (188) therebetween;
at least one of the first median plane and the second median plane forms an angle different from 90 degrees with the unaltered surface portion;
wherein the following relation holds:

$$d(z)/d0 < SQRT (1 + (z / 1.5 \text{ millimeters})* (z / 1.5 \text{ millimeters}));$$

and wherein

d0 is the width of the first recess portion,
the first recess portion is a recess portion having the smallest width among the recess portions of the recess pattern,

d(z) is the width of the second recess portion,

SQRT is the square root function,

z is the distance of a plane through the opening of the second recess portion and perpendicular to the direction of the radiation beam from a plane through the opening of the first recess portion and perpendicular to the direction of the radiation beam.

11. Rubber article according to claim 9 or 10, wherein the direction of the radiation beam is an average direction of the radiation beam which is given by the direction of a crossing line between the first median plane and the second median plane.

12. Rubber article according to claim 8, wherein

first opposing wall portions (180) of the first recess portion define a smallest width of an opening of the first recess portion which smallest width is also referred to as width of the first recess portion;

the first opposing wall portions define a first median plane (182) therebetween;

second opposing wall portions (186) of the second recess portion define a smallest width of an opening of the second recess portion which smallest width is also referred to as width of the second recess portion;

the second opposing wall portions (186) define a second median plane (188) therebetween;

the first median plane and the second median plane are crossing each other;

the opening of the second recess portion is spaced from the opening of the first recess portion in a direction of a crossing line of the first median plane and the second median plane; and

the width of the second recess portion differs from to the width of the first recess portion by less than ten percent of the width of the first recess portion.

13. Rubber article according to any one of claims 9 to 12, wherein the width of the first recess portion (124) and the width of the second recess portion (126) is larger than 100 $\mu$m, in particular larger than 200 $\mu$m.

14. Rubber article according to any one of claims 8 to 13, wherein

the unaltered surface portion is a curved surface portion;

and/or

the recess pattern comprising a plurality of recess portions which are part of a single recess forming a recess grid, the digital code pattern comprises an array of code modules, and the recess grid forms an angle to one of the edges of the modules, the angle being between 20 degrees and 70 degrees;

and/or

the digital code pattern comprises a first code module and a second code module adjacent the first code module, and at the location of the first code module the recess pattern comprises a first type of recess portion and at the location of the second code module the recess pattern comprises a second type of recess portion which differs from the first type of recess portion in shape and/or orientation;

and/or

the digital code pattern comprises three adjacent code modules in a line, a first code module, a third code module and a second code module between the first code module and the third code module, and at the position of the first code module and at the position of the third code module the recess pattern comprises a first type of recess portion and at the position of the second code module the recess pattern comprises a second type of recess portion which differs from the first type of recess portion in shape and/or orientation;

and/or

the unaltered surface portion is a curved surface portion;

and/or

the recess pattern is a recess pattern that was generated by selective removal of rubber material with a radiation beam, in particular a laser beam.

15. Computer program product configured for controlling a marking device, the computer program product being configured for, when executed on a data processor device, controlling the method according to any one of claims 1 to 6.

**Patentansprüche**

1. Verfahren zum Markieren eines Gummiartikels (102), wobei das Verfahren aufweist:

Erzeugen eines Ausnehmungsmusters (122, 222, 322, 422, 522) in dem Gummiartikel (102) durch Entfernen von Gummimaterial, wobei das Ausnehmungsmuster (122, 222, 322, 422, 522) ein digitales Codemuster definiert;

wobei das digitale Codemuster eine Anordnung von Codemodulen (150) aufweist;

wobei das digitale Codemuster ein binäres Codemuster ist, bei dem die Codemodule (150) entweder eine digitale "0" oder eine digitale "1" repräsentieren;

das Ausnehmungsmuster (122, 222, 322, 422, 522) einen ersten Ausnehmungsteil (124) und einen zweiten Ausnehmungsteil (126) aufweist, wobei der erste und der zweite Ausnehmungsteil in Bezug auf eine unveränderte Oberfläche des Gummiartikels vertieft sind;

wobei das Ausnehmungsmuster (122, 222, 322, 422, 522) Codemodule mit relativ niedrigem Reflexionsvermögen definiert, wobei ein Codemodul mit einem Ausnehmungsteil (122, 124) ein Codemodul mit relativ niedrigem Reflexionsvermögen im Vergleich zu einem Codemodul mit einem relativ hohen Reflexionsvermögen ohne Ausnehmungsteil darstellt;

wobei der erste Ausnehmungsteil (124) und der zweite Ausnehmungsteil (126) zwischen sich einen Vorsprung (130) definieren, der über einen Boden (132, 134) jedes Ausnehmungsteils vorsteht;

wobei ein Abstand (136) zwischen dem ersten Ausnehmungsteil und dem zweiten Ausnehmungsteil größer als 0,5 mm ist; oder

wobei der erste Ausnehmungsteil (124) und der zweite Ausnehmungsteil (126) Teil einer den Vorsprung umgebenden Ausnehmung (152) sind und der Vorsprung (130) eine Grundfläche von mehr als 0,2 Quadratmillimeter aufweist;

wobei das Verfahren ferner das Erzeugen von mindestens einem von dem ersten Ausnehmungsteil (124) und dem zweiten Ausnehmungsteil (126) mit einem Aspektverhältnis zwischen 0,2 und 2 aufweist, wobei das Aspektverhältnis als die Tiefe des Ausnehmungsteils über die Breite des Ausnehmungsteils definiert ist.

2. Verfahren nach Anspruch 1, wobei das Entfernen von Gummimaterial mit einem elektromagnetischen Strahlungsstrahl, insbesondere mit einem Laserstrahl (112), durchgeführt wird;

wobei insbesondere
die Rayleigh-Länge des Strahlungsstrahls größer als 1,5 Millimeter ist; und/oder
wobei das Verfahren ein Einstellen der Fokusposition des Strahlungsstrahls in der Richtung des Strahlungsstrahls während der Erzeugung des digitalen Codemusters aufweist;
und/oder
die $1/e^2$ Strahlbreite des Strahlungsstrahls größer als 100 $\mu$m, insbesondere größer als 200 $\mu$m, ist; und/oder
der Strahlungsstrahl ein Laserstrahl eines Kohlendioxidlasers ist.

3. Verfahren nach einem der vorstehenden Ansprüche,

wobei das Ausnehmungsmuster eine Vielzahl von Ausnehmungsteilen aufweist, die einander nicht überlappen;
wobei die Mehrzahl von Ausnehmungsteilen zusammen ein erhöhtes Gitter definieren, wobei das erhöhte Gitter den Vorsprung und einen weiteren Vorsprung, der den Vorsprung kreuzt, aufweist.

4. Verfahren nach einem der Ansprüche 1 oder 2,

wobei das Ausnehmungsmuster eine Vielzahl von Ausnehmungsteilen aufweist, die Teil einer einzigen Ausnehmung sind, die ein Ausnehmungsgitter bildet;
insbesondere wobei das Ausnehmungsgitter zwei Ausnehmungslinien aufweist, die sich an einem Kreuzungspunkt des Ausnehmungsgitters kreuzen, und eine Tiefe des Ausnehmungsgitters an dem Kreuzungspunkt um weniger als 30% von der Tiefe des Ausnehmungsgitters in einem benachbarten Teil einer der beiden sich kreuzenden Ausnehmungslinien abweicht;
und/oder

wobei das digitale Codemuster eine Anordnung von Codemodulen aufweist und das Ausnehmungsgitter einen Winkel zu einer der Kanten der Module bildet, wobei der Winkel zwischen 20 und 70 Grad liegt.

5. Verfahren gemäß einem der vorhergehenden Ansprüche, wobei das digitale Codemuster ein erstes Codemodul und ein zweites Codemodul neben dem ersten Codemodul aufweist, wobei das Verfahren ferner aufweist
an der Stelle des ersten Codemoduls eine erste Art von Ausnehmungsteil zu erzeugen und an der Stelle des zweiten Codemoduls eine zweite Art von Ausnehmungsteil zu erzeugen, die sich von der ersten Art von Ausnehmungsteil in Form und/oder Ausrichtung unterscheidet.

6. Verfahren nach einem der Ansprüche 1 bis 4, wobei das digitale Codemuster drei benachbarte Codemodule in einer Linie aufweist, ein erstes Codemodul, ein drittes Codemodul und ein zweites Codemodul zwischen dem ersten Codemodul und dem dritten Codemodul, wobei das Verfahren ferner aufweist
an der Position des ersten Codemoduls und an der Position des dritten Codemoduls eine erste Art von Ausnehmungsteil zu erzeugen und an der Position des zweiten Codemoduls eine zweite Art von Ausnehmungsteil zu erzeugen, der sich von der ersten Art von Ausnehmungsteil in Form und/oder Ausrichtung unterscheidet.

7. Markierungsvorrichtung zum Markieren eines Gummiartikels, insbesondere eines Reifens, wobei die Markierungsvorrichtung aufweist:

ein Werkzeug (104), insbesondere einen Laser, zum Entfernen von Gummimaterial des Gummiartikels;
eine Steuervorrichtung (114) zur Steuerung des Werkzeugs, um dadurch das Verfahren gemäß einem der vorstehenden Ansprüche durchzuführen.

8. Gummiartikel aufweisend:

ein Ausnehmungsmuster (122, 222, 322, 422, 522) in dem Gummiartikel, wobei das Ausnehmungsmuster ein digitales Codemuster definiert;
wobei das digitale Codemuster eine Anordnung von Codemodulen (150) aufweist;
wobei das digitale Codemuster ein binäres Codemuster ist, bei dem die Codemodule (150) entweder eine digitale "0" oder eine digitale "1" repräsentieren;
wobei das Ausnehmungsmuster einen ersten Ausnehmungsteil (124) und einen zweiten Ausnehmungsteil (126) aufweist, wobei der erste und der zweite Ausnehmungsteil in Bezug auf eine unveränderte Oberfläche des Gummiartikels vertieft sind;
wobei das Ausnehmungsmuster (122, 222, 322, 422, 522) Codemodule mit relativ niedrigem Reflexionsvermögen definiert, wobei ein Codemodul mit einem Ausnehmungsteil (122, 124) ein Codemodul mit relativ niedrigem Reflexionsvermögen im Vergleich zu einem Codemodul mit einem relativ hohen Reflexionsvermögen ohne Ausnehmungsteil darstellt;
wobei der erste Ausnehmungsteil (124) und der zweite Ausnehmungsteil (126) zwischen sich einen Vorsprung (130, 230) definieren, der über einen Boden jedes Ausnehmungsteils vorsteht;
wobei mindestens einer von dem ersten Ausnehmungsteil (124) und dem zweiten Ausnehmungsteil (126) ein Aspektverhältnis zwischen 0,2 und 2 aufweist, wobei das Aspektverhältnis als eine Tiefe des Ausnehmungsteils über die Breite des Ausnehmungsteils definiert ist;
wobei ein Abstand zwischen dem ersten Ausnehmungsteil (124) und dem zweiten Ausnehmungsteil (126) größer als 0,5 mm ist oder,
wenn der Vorsprung von zusammenhängenden Ausnehmungsteilen umgeben ist, der Vorsprung (130, 230) eine Grundfläche von mehr als 0,2 Quadratmillimeter aufweist.

9. Gummiartikel nach Anspruch 8, wobei

erste gegenüberliegende Wandteile (180) des ersten Ausnehmungsteils (124) eine kleinste Breite einer Öffnung des ersten Ausnehmungsteils definieren, wobei diese kleinste Breite auch als Breite des ersten Ausnehmungsteils bezeichnet wird;
die ersten gegenüberliegenden Wandteile (180) eine erste Medianebene (182) dazwischen definieren;
zweite gegenüberliegende Wandteile (186) des zweiten Ausnehmungsteils eine kleinste Breite einer Öffnung des zweiten Ausnehmungsteils definieren, wobei diese kleinste Breite auch als Breite des zweiten Ausnehmungsteils bezeichnet wird;
die zweiten gegenüberliegenden Wandteile (186) eine zweite Medianebene (188) dazwischen definieren;
mindestens eine der ersten Medianebene und der zweiten Medianebene mit dem unveränderten Oberflächenanteil einen von 90 Grad abweichenden Winkel bildet;
wobei das Vertiefungsmuster durch selektives Entfernen von Gummimaterial mit einem Strahlungsstrahl gebildet wurde;
wobei sich die Abweichung der Breite des ersten Ausnehmungsteils im Vergleich zur Breite des zweiten Ausnehmungsteils ergibt

(i) aus einer Rayleigh-Länge des Strahlungsstrahls, die größer als 1,5 Millimeter ist,

und/oder
(ii) aus einer Einstellung der Fokuslage des Strahlungsstrahls in Richtung des Strahlungsstrahls während der Erzeugung des digitalen Codemusters.

**10.** Gummiartikel nach Anspruch 8, wobei

erste gegenüberliegende Wandteile (180) des ersten Ausnehmungsteils eine kleinste Breite einer Öffnung des ersten Ausnehmungsteils definieren, wobei diese kleinste Breite auch als Breite des ersten Ausnehmungsteils bezeichnet wird;
die ersten gegenüberliegenden Wandteile (180) eine erste Medianebene (182) dazwischen definieren;
zweite gegenüberliegende Wandteile (186) des zweiten Ausnehmungsteils eine kleinste Breite einer Öffnung des zweiten Ausnehmungsteils definieren, wobei diese kleinste Breite auch als Breite des zweiten Ausnehmungsteils bezeichnet wird;
die zweiten gegenüberliegenden Wandteile (186) eine zweite Medianebene (188) dazwischen definieren;
mindestens eine der ersten Medianebene und der zweiten Medianebene mit dem unveränderten Oberflächenanteil einen von 90 Grad abweichenden Winkel bildet;
wobei die folgende Beziehung gilt:

$$d(z)/d0 < SQRT (1 + (z / 1,5 \text{ Millimeter})* (z / 1,5 \text{ Millimeter}));$$

und wobei

d0 die Breite des ersten Ausnehmungsteils ist,
der erste Ausnehmungsteil ein Ausnehmungsteil mit der kleinsten Breite unter den Ausnehmungsteilen des Ausnehmungsmusters ist,
d(z) die Breite des zweiten Ausnehmungsteils ist,
SQRT die Quadratwurzelfunktion ist,
z ein Abstand ist einer Ebene durch die Öffnung des zweiten Ausnehmungsteils und senkrecht zur Richtung des Strahlungsstrahls von einer Ebene durch die Öffnung des ersten Ausnehmungsteils und senkrecht zur Richtung des Strahlungsstrahls.

**11.** Gummiartikel nach Anspruch 9 oder 10, wobei die Richtung des Strahlungsstrahls eine mittlere Richtung des Strahlungsstrahls ist, die durch die Richtung einer Kreuzungslinie zwischen der ersten Medianebene und der zweiten Medianebene gegeben ist.

**12.** Gummiartikel nach Anspruch 8, wobei

erste gegenüberliegende Wandteile (180) des ersten Ausnehmungsteils eine kleinste Breite einer Öffnung des ersten Ausnehmungsteils definieren, wobei diese kleinste Breite auch als Breite des ersten Ausnehmungsteils bezeichnet wird;
die ersten gegenüberliegenden Wandteile eine erste Medianebene (182) dazwischen definieren;
zweite gegenüberliegende Wandteile (186) des zweiten Ausnehmungsteils eine kleinste Breite einer Öffnung des zweiten Ausnehmungsteils definieren, wobei diese kleinste Breite auch als Breite des zweiten Ausnehmungsteils bezeichnet wird;
die zweiten gegenüberliegenden Wandteile (186) eine zweite Medianebene (188) dazwischen definieren;
die erste Medianebene und die zweite Medianebene einander kreuzen;
die Öffnung des zweiten Ausnehmungsteils von der Öffnung des ersten Ausnehmungsteils in Richtung einer Schnittlinie der ersten Medianebene und der zweiten Medianebene beabstandet ist; und
die Breite des zweiten Ausnehmungsteils von der Breite des ersten Ausnehmungsteils um weniger als zehn Prozent der Breite des ersten Ausnehmungsteils abweicht.

**13.** Gummiartikel nach einem der Ansprüche 9 bis 12, wobei die Breite des ersten Ausnehmungsteils (124) und die Breite des zweiten Ausnehmungsteils (126) größer als 100 $\mu$m, insbesondere größer als 200 $\mu$m, ist.

**14.** Gummiartikel nach einem der Ansprüche 8 bis 13, wobei

der unveränderte Oberflächenteil ist ein gekrümmter Oberflächenteil;

und/oder

wobei das Ausnehmungsmuster eine Vielzahl von Ausnehmungsteilen aufweist, die Teil einer einzigen Ausnehmung sind, die ein Ausnehmungsgitter bildet, das digitale Codemuster eine Anordnung von Codemodulen aufweist und das Ausnehmungsgitter einen Winkel zu einer der Kanten der Module bildet, wobei der Winkel zwischen 20 Grad und 70 Grad liegt;

und/oder

das digitale Codemuster ein erstes Codemodul und ein an das erste Codemodul angrenzendes zweites Codemodul aufweist, und an der Stelle des ersten Codemoduls das Ausnehmungsmuster einen ersten Typ von Ausnehmungsteil aufweist und an der Stelle des zweiten Codemoduls das Ausnehmungsmuster einen zweiten Typ von Ausnehmungsteil aufweist, der sich von dem ersten Typ von Ausnehmungsteil in Form und/oder Orientierung unterscheidet;

und/oder

das digitale Codemuster drei benachbarte Codemodule in einer Zeile aufweist, ein erstes Codemodul, ein drittes Codemodul und ein zweites Codemodul zwischen dem ersten Codemodul und dem dritten Codemodul, und an der Position des ersten Codemoduls und an der Position des dritten Codemoduls das Ausnehmungsmuster einen ersten Typ eines Ausnehmungsteils aufweist und an der Position des zweiten Codemoduls das Ausnehmungsmuster einen zweiten Typ eines Ausnehmungsteils aufweist, der sich von dem ersten Typ des Ausnehmungsteils in Form und/oder Orientierung unterscheidet;

und/oder

der unveränderte Oberflächenteil ein gekrümmter Oberflächenteil ist;

und/oder

das Ausnehmungsmuster ein Ausnehmungsmuster ist, das durch selektives Abtragen von Gummimaterial mit einem Strahl, insbesondere einem Laserstrahl, erzeugt wurde.

15. Computerprogrammprodukt, das zur Steuerung einer Markierungsvorrichtung konfiguriert ist, wobei das Computerprogrammprodukt, wenn es auf einer Datenprozessorvorrichtung ausgeführt wird, zur Steuerung des Verfahrens nach einem der Ansprüche 1 bis 6 konfiguriert ist.

## Revendications

1. Procédé de marquage d'un article en caoutchouc (102), le procédé comprenant :

le fait de générer un motif en creux (122, 222, 322, 422, 522) dans l'article en caoutchouc (102) par enlèvement de matière caoutchouteuse, le motif en creux (122, 222, 322, 422, 522) définissant un motif formant code numérique ;

le motif formant code numérique comprenant un ensemble de modules de code (150) ;

le motif formant code numérique étant un motif en code binaire dont les modules de code (150) représentent soit un "0" numérique, soit un "1" numérique ;

le motif en creux (122, 222, 322, 422, 522) comprenant une première partie en creux (124) et une deuxième partie en creux (126), les première et deuxième parties en creux étant aménagées en creux par rapport à une surface non modifiée de l'article en caoutchouc ;

le motif en creux (122, 222, 322, 422, 522) définissant des modules de code ayant une réflectivité relativement faible, un module de code qui comprend une partie en creux (122, 124) représentant un module de code ayant une réflectivité relativement faible par rapport à un module de code ayant une réflectivité relativement élevée n'ayant pas de partie en creux ;

la première partie en creux (124) et la deuxième partie en creux (126) définissant entre elles une protubérance (130) faisant saillie par rapport à un fond (132, 134) de chaque partie en creux ;

un pas (136) entre la première partie en creux et la deuxième partie en creux étant supérieur à 0,5 mm ; ou la première partie en creux (124) et la deuxième partie en creux (126) faisant partie d'un évidement (152) entourant la protubérance, et la protubérance (130) ayant une surface de base de plus de 0,2 millimètre carré ;

le procédé comprenant en outre le fait de générer au moins une parmi la première partie en creux (124) et la deuxième partie en creux (126) avec un rapport d'aspect compris entre 0,2 et 2, le rapport d'aspect étant défini comme la profondeur de la partie en creux sur la largeur de la partie en creux.

2. Procédé selon la revendication 1, dans lequel ledit enlèvement de la matière caoutchouteuse est réalisé au moyen d'un faisceau de rayonnement électromagnétique, notamment d'un faisceau laser (112) ; en particulier,

la longueur de Rayleigh du faisceau de rayonnement est supérieure à 1,5 millimètres ; et / ou
le procédé comprend le fait de régler la position de focalisation du faisceau de rayonnement dans la direction du faisceau de rayonnement pendant la génération du motif formant code numérique ; et / ou
la largeur du faisceau $1/e^2$ du faisceau de rayonnement est supérieure à 100 $\mu$m, en particulier supérieure à 200 $\mu$m ; et / ou
le faisceau de rayonnement est un faisceau laser d'un laser à dioxyde de carbone.

3. Procédé selon l'une quelconque des revendications précédentes,
le motif en creux comprenant une pluralité de parties en creux qui ne se chevauchent pas les unes les autres ;
la pluralité de parties en creux définissant ensemble une grille surélevée, la grille surélevée comprenant la protubérance et une autre protubérance croisant la protubérance.

4. Procédé selon l'une quelconque des revendications 1 ou 2,
le motif en creux comprenant une pluralité de parties en creux qui font partie d'un évidement unique formant une grille en creux ;
la grille en creux comprenant en particulier deux lignes en creux qui se croisent l'une l'autre en un point de croisement de la grille en creux, et une profondeur de la grille en creux au point de croisement diffère de moins de 30% de la profondeur de la grille en creux dans une partie adjacente de l'une des deux lignes en creux qui se croisent ; et / ou
le motif formant code numérique comprenant un ensemble de modules de code, et la grille en creux formant un angle avec l'un des bords des modules, l'angle étant compris entre 20 et 70 degrés.

5. Procédé selon l'une quelconque des revendications précédentes, dans lequel le motif formant code numérique comprend un premier module de code et un deuxième module de code adjacent au premier module de code, le procédé comprenant en outre
le fait de générer à l'emplacement du premier module de code un premier type de partie en creux et le fait de générer à l'emplacement du deuxième module de code un deuxième type de partie en creux qui diffère du premier type de partie en creux par sa forme et / ou son orientation.

6. Procédé selon l'une quelconque des revendications 1 à 4, dans lequel le motif formant code numérique comprend trois modules de code adjacents en ligne, un premier module de code, un troisième module de code et un deuxième module de code situé entre le premier module de code et le troisième module de code, le procédé comprenant en outre
le fait de générer à la position du premier module de code et à la position du troisième module de code un premier type de partie en creux et le fait de générer à la position du deuxième module de code un deuxième type de partie en creux qui diffère du premier type de partie en creux par sa forme et / ou son orientation.

7. Dispositif de marquage pour marquer un article en caoutchouc, en particulier un pneumatique, le dispositif de marquage comprenant :

un outil (104), en particulier un laser, pour enlever la matière caoutchouteuse de l'article en caoutchouc ;
un dispositif de commande (114) pour commander l'outil de façon à mettre en œuvre le procédé selon l'une quelconque des revendications précédentes.

8. Article en caoutchouc comprenant :

un motif en creux (122, 222, 322, 422, 522) dans l'article en caoutchouc, le motif en creux définissant un motif formant code numérique ;
le motif formant code numérique comprenant un ensemble de modules de code (150) ;
le motif formant code numérique étant un motif en code binaire dont les modules de code (150) représentent soit un "0" numérique soit un "1" numérique ;
le motif en creux comprenant une première partie en creux (124) et une deuxième partie en creux (126), les première et deuxième parties en creux étant aménagées en creux par rapport à une surface non modifiée de l'article en caoutchouc ;
le motif en creux (122, 222, 322, 422, 522) définissant des modules de code ayant une réflectivité relativement faible, un module de code qui comprend une partie en creux (122, 124) représentant un module de code ayant une réflectivité relativement faible par rapport à un module de code ayant une réflectivité relativement élevée n'ayant pas de partie en creux ;

la première partie en creux (124) et la deuxième partie en creux (126) définissant entre elles une protubérance (130, 230) faisant saillie par rapport à un fond de chaque partie en creux ;

au moins une parmi la première partie en creux (124) et la deuxième partie en creux (126) ayant un rapport d'aspect compris entre 0,2 et 2, le rapport d'aspect étant défini comme une profondeur de la partie en creux sur la largeur de la partie en creux ;

un pas entre la première partie en creux (124) et la deuxième partie en creux (126) étant supérieur à 0,5 mm ou si la protubérance est entourée par des parties en creux reliées, la protubérance (130, 230) a une surface de base de plus de 0,2 millimètre carré.

**9.** Article en caoutchouc selon la revendication 8, dans lequel

des premières parties de paroi opposées (180) de la première partie en creux (124) définissent une plus petite largeur d'une ouverture de la première partie en creux, laquelle plus petite largeur est également appelée largeur de la première partie en creux ;

les premières parties de paroi opposées (180) définissent entre elles un premier plan médian (182) ;

des deuxièmes parties de paroi opposées (186) de la deuxième partie en creux définissent une plus petite largeur d'une ouverture de la deuxième partie en creux, laquelle plus petite largeur est également appelée largeur de la deuxième partie en creux ;

les deuxièmes parties de paroi opposées (186) définissent entre elles un deuxième plan médian (188) ;

au moins un parmi le premier plan médian et le deuxième plan médian forme un angle différent de 90 degrés avec la partie de surface non modifiée ;

le motif en creux étant formé par enlèvement sélectif de la matière caoutchouteuse au moyen d'un faisceau de rayonnement ;

l'écart de la largeur de la première partie en creux par rapport à la largeur de la deuxième partie en creux résultant

(i) d'une longueur de Rayleigh du faisceau de rayonnement supérieure à 1,5 millimètre,
et / ou
(ii) d'un réglage de la position de focalisation du faisceau de rayonnement dans une direction du faisceau de rayonnement pendant la génération du motif formant code numérique.

**10.** Article en caoutchouc selon la revendication 8, dans lequel

des premières parties de paroi opposées (180) de la première partie en creux définissent une plus petite largeur d'une ouverture de la première partie en creux, laquelle plus petite largeur est également appelée largeur de la première partie en creux ;

les premières parties de paroi opposées (180) définissent entre elles un premier plan médian (182) ;

des deuxièmes parties de paroi opposées (186) de la deuxième partie en creux définissent une plus petite largeur d'une ouverture de la deuxième partie en creux, laquelle plus petite largeur est également appelée largeur de la deuxième partie en creux ;

les deuxièmes parties opposées (186) définissent entre elles un deuxième plan médian (188) ;

au moins un parmi le premier plan médian et le deuxième plan médian forme un angle différent de 90 degrés avec la partie de surface non modifiée ;

la relation suivante s'appliquant :

$$d(z)/d0 < \mathrm{SQRT}\,(1 + (z\,/\,1{,}5\ \text{millimètres}) * (z\,/\,1{,}5\ \text{millimètres}))\ ;$$

et dans laquelle

d0 est la largeur de la première partie en creux,
la première partie en creux est une partie en creux ayant la plus petite largeur parmi les parties en creux du motif en creux,
d(z) est la largeur de la deuxième partie en creux,
SQRT est la fonction racine carrée,
z est la distance d'un plan passant par l'ouverture de la deuxième partie en creux et perpendiculaire à la direction du faisceau de rayonnement à partir d'un plan passant par l'ouverture de la première partie en creux et perpendiculaire à la direction du faisceau de rayonnement.

**11.** Article en caoutchouc selon la revendication 9 ou la revendication 10, dans lequel la direction du faisceau de rayonnement est une direction moyenne du faisceau de rayonnement qui est donnée par la direction d'une ligne de croisement entre le premier plan médian et le deuxième plan médian.

12. Article en caoutchouc selon la revendication 8, dans lequel
des premières parties de paroi opposées (180) de la première partie en creux définissent une plus petite largeur d'une ouverture de la première partie en creux, laquelle plus petite largeur est également appelée largeur de la première partie en creux ;
les premières parties de paroi opposées définissent entre elles un premier plan médian (182) ;
des deuxièmes parties de paroi opposées (186) de la deuxième partie en creux définissent une plus petite largeur d'une ouverture de la deuxième partie en creux, laquelle plus petite largeur est également appelée largeur de la deuxième partie en creux ;
les deuxièmes parties de paroi opposées (186) définissent entre elles un deuxième plan médian (188) ;
le premier plan médian et le deuxième plan médian se croisent l'un l'autre ;
l'ouverture de la deuxième partie en creux est espacée de l'ouverture de la première partie en creux dans une direction d'une ligne de croisement du premier plan médian et du deuxième plan médian ; et
la largeur de la deuxième partie en creux diffère de la largeur de la première partie en creux de moins de dix pour cent de la largeur de la première partie en creux.

13. Article en caoutchouc selon l'une quelconque des revendications 9 à 12, dans lequel la largeur de la première partie en creux (124) et la largeur de la deuxième partie en creux (126) sont supérieures à 100 $\mu$m, en particulier supérieures à 200 $\mu$m.

14. Article en caoutchouc selon l'une quelconque des revendications 8 à 13, dans lequel
la partie de surface non modifiée est une partie de surface incurvée ;
et / ou
le motif en creux comprend une pluralité de parties en creux qui font partie d'un évidement unique formant une grille en creux, le motif formant code numérique comprend un ensemble de modules de code, et la grille en creux forme un angle avec l'un des bords des modules, l'angle étant compris entre 20 degrés et 70 degrés ;
et / ou
le motif formant code numérique comprend un premier module de code et un deuxième module de code adjacent au premier module de code, et à l'emplacement du premier module de code, le motif en creux comprend un premier type de partie en creux et à l'emplacement du deuxième module de code, le motif en creux comprend un deuxième type de partie en creux qui diffère du premier type de partie en creux par sa forme et / ou son orientation ;
et / ou
le motif formant code numérique comprend trois modules de code adjacents en ligne, un premier module de code, un troisième module de code et un deuxième module de code situé entre le premier module de code et le troisième module de code, et, à la position du premier module de code et à la position du troisième module de code, le motif en creux comprend un premier type de partie en creux et, à la position du deuxième module de code, le motif en creux comprend un deuxième type de partie en creux qui diffère du premier type de partie en creux par sa forme et / ou son orientation ;
et / ou
la partie de surface non modifiée est une partie de surface incurvée ;
et / ou
le motif en creux est un motif en creux qui a été généré par enlèvement sélectif de matière caoutchouteuse avec un faisceau de rayonnement, en particulier un faisceau laser.

15. Produit de programme informatique configuré pour commander un dispositif de marquage, le produit de programme informatique étant configuré pour, lorsqu'il est exécuté sur un dispositif de traitement de données, commander le procédé selon l'une quelconque des revendications 1 à 6.

Fig. 1

Fig. 2

Fig. 3

Fig. 4

23

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1063071 A2
- US 20090218019 A1
- US 20120227879 A1
- WO 2005000714 A1
- US 20030201202 A1
- US 4564737 A